# EUROPÄISCHE PATENTSCHRIFT

(11) **EP 3 346 148 B1**
(45) Veröffentlichungstag und Bekanntmachung des Hinweises auf die Patenterteilung: **11.03.2020**
(21) Anmeldenummer: 17207207.6
(22) Anmeldetag: 14.12.2017
(51) Int. Cl.: B60Q 1/076, F16C 11/06, B60Q 1/068, F16C 11/10

(54) **KUGELGELENK**
BALL JOINT
JOINT PIVOTANT

(30) Priorität: 10.01.2017 AT 500112017
(43) Veröffentlichungstag der Anmeldung: 11.07.2018
(73) Patentinhaber: ZKW Group GmbH, 3250 Wieselburg (AT)
(72) Erfinder: Hungendorfer, Martin, 3642 Häusling/Dunkelsteinerwald (AT); Hauer, Clemens, 3261 Steinakirchen am Forst (AT); Bachler, Jörg, 3652 Leoben (AT)
(74) Vertreter: Patentanwaltskanzlei Matschnig & Forsthuber OG

(56) Entgegenhaltungen:
- EP-A2- 1 614 911
- US-A- 5 833 347
- US-A1- 2009 257 819
- US-A1- 2013 236 238
- US-B1- 6 670 553
- US-B1- 7 494 157
- US-B2- 9 429 185

## Beschreibung

Die Erfindung betrifft ein Kugelgelenk, insbesondere zur Befestigung eines Scheinwerfers in einem Fahrzeug.

Außerdem betrifft die Erfindung ein Verfahren zur Herstellung eines Kugelgelenks.

Hierzu zeigt die US 9 429 185 B2, die US 2013/236238 A1, US 2009/257819 A1 und EP 1 614 911 A2 ein Kugelgelenk aus dem Stand der Technik.

Die US 7 494157 B1 und US 6 670 553 B1 offenbaren ein Verfahren zur Herstellung einer Gelenkspfanne aus dem Stand der Technik.

US 5 833 347 A offenbart ein Kugelgelenk gemäß dem Oberbegriff des Anspruchs 1.

Beim Einbau eines Fahrzeugscheinwerfers in ein Kraftfahrzeug wird der Scheinwerfer beispielsweise an einem Tragrahmen, einem Karosserieteil oder einer anderen Komponente des Fahrzeugs montiert. Die genannten Teile sowie der Scheinwerfer selbst weisen teils hohe Toleranzen in deren Abmessungen, aber auch in der Position und Ausführungspräzision der zur Montage vorgesehenen Befestigungseinheiten, wie Bohrungen, Gewinde, Ausrichtstifte, Schrauben, Nieten etc. auf.

Zum Ausgleich von Toleranzen gibt es verschiedene Konzepte zur Befestigung eines Fahrzeugscheinwerfers in ein Kraftfahrzeug, wie beispielsweise durch Verwendung einer Schraube, die an einem Ende eine Kugel aufweist, die gemeinsam mit einer Gelenkspfanne zur Bildung eines Kugelgelenks verwendet werden kann. Derartige Kugelgelenke können eine feste Verbindung zwischen den beiden, durch das Kugelgelenk verbundenen Teilen herstellen.

Kugelgelenke nach dem Stand der Technik weisen den Nachteil auf, dass sie über niedrige Feststellmomente verfügen, da sie häufig aus Kunststoffmaterial gefertigt sind. Mit anderen Worten kann die Haltekraft des Kugelgelenks für manche Anwendungen unzureichend sein, was insbesondere bei den beschriebenen Verbindungen zwischen einem Fahrzeugscheinwerfer und einem fahrzeugseitigen Montageteil auftreten kann, da bei Kraftfahrzeugen unter anderem starke Vibrationen und hohe jahreszeitbedingte Temperaturschwankungen Einfluss auf die Feststellkraft einer Kugelgelenkverbindung haben können. Je nach Einbausituation, insbesondere bei Kraftfahrzeugen, können zusätzlich besondere Anforderungen hinsichtlich beispielsweise Festigkeit, Schock, Hochtemperaturbeständigkeit, geringerer Reibungskoeffizienten bestehen, die durch konventionelle Kugelgelenke nicht erfüllt werden können.

In einem weiteren Aspekt benötigen derzeit verfügbare Kugelgelenke, die beispielsweise einen Tragrahmen und eine Komponente verbinden sollen, komplexe Schnittstellen. Ferner können diese Schnittstellen hohe Anforderungen an die Maßhaltigkeit und Toleranzen stellen, die eine derartige Lösung teuer machen können. Zusätzlich kann die Definition von Schnittstellen konstruktiven Aufwand erfordern, was sich in entsprechenden Kosten der Einzelteile niederschlagen kann. Außerdem können unterschiedliche Materialien bei Komponenten eingesetzt werden, was dazu führen kann, dass für jedes verwendete Material ein Kugelgelenk speziell angepasst werden muss.

In einem anderen Aspekt können derzeit verfügbare Kugelgelenke umständlich in der Herstellung sein, beispielsweise wenn deren Einzelkomponenten bei der Montage herunterfallen.

Außerdem benötigen derzeit verfügbare Kugelgelenke häufig viel Bauraum beziehungsweise viel Material für die einzelnen Komponenten, was sich in Hantierbarkeit, Kosten und Gewicht niederschlagen kann.

Die Erfindung setzt sich zur Aufgabe die genannten Nachteile zu überwinden.

Die Aufgabe wird ausgehend von einem Kugelgelenk der eingangs genannten Art dadurch gelöst, dass das Kugelgelenk umfasst:
einen Gelenkszapfen, der eine Gelenkskugel umfasst, die auf einer Seite in eine Stirnseite eines im Wesentlichen zylindrisch geformten Gelenkschafts übergeht, und
eine Gelenkspfanne zur Aufnahme der Gelenkskugel, wobei die Gelenkspfanne eine hohlzylindrische Grundform aufweist und aus einem federnd elastischen Metall,
vorzugsweise aus Federstahl besteht, und
   entlang des Umfangs der hohlzylindrischen Gelenkspfanne zumindest zwei hintere Gelenksflügel ausgebildet sind, die gegen die Einbaurichtung des Gelenkszapfens orientiert sind und radial zur gedachten Längsachse der Gelenkspfanne geneigt sind, und
   entlang des Umfangs der hohlzylindrischen Gelenkspfanne zumindest zwei vordere Gelenksflügel ausgebildet sind, die in Einbaurichtung des Gelenkszapfens orientiert sind und radial zur gedachten Längsachse der Gelenkspfanne geneigt sind,
wobei die zumindest zwei hinteren Gelenksflügel und die zumindest zwei vorderen Gelenksflügel eingerichtet sind an der Gelenkskugel anzuliegen und durch Federkraft an die Gelenkskugel gedrückt zu werden.

Durch die Erfindung wird ein Kugelgelenk geschaffen, das sehr einfach zu konstruieren und herzustellen ist, wodurch Kostenvorteile entstehen. Zudem ist das Kugelgelenk sehr leicht. Insbesondere bei der Verwendung von Metall als Material für eine Gelenkspfanne, das heißt für den Rohling zur Herstellung der Gelenkspfanne, ist diese für die Anwendung in rauen Umgebungsbedingungen wie bei einem Kraftfahrzeug (sehr hohe und sehr niedrige Betriebstemperaturen, hohe Feuchtigkeit, Verschmutzung) sehr gut geeignet und weist eine sehr lange Lebensdauer auf. Zusätzlich ist die Gelenkspfanne dazu geeignet, Bauteiltoleranzen der Gelenkskugel, der Gelenkspfanne und dem Gelenkszapfen auszugleichen. In der Herstellung ist eine metallische Gelenkspfanne für verschiedene Bearbeitungsmethoden wie Stanzen oder Laserschneiden geeignet, die die Fertigung in jeweils unterschiedlicher Präzision erlauben. Die unterschiedlichen Bearbeitungsmethoden erlauben ferner eine Anpassung an sehr unterschiedliche Produktionsvolumina, um die jeweiligen Kostenvorteile nützen zu können. Das erfindungsgemäße Kugelgelenk weist ein fehlertolerantes Design auf, wodurch die Flexibilität, zwischen einer Prototypenherstellung und einer Großserienherstellung das Herstellungsverfahren für die gleiche Gelenkspfanne wechseln zu können, ein entscheidender Vorteil ist. Außerdem unterstützt die erfindungsgemäße Konstruktion einen leichten Zusammenbau des Kugelgelenks, indem die einzelnen Komponenten ineinander einrasten, sich selbst halten und folglich ein Herunterfallen einzelnen Teile vermieden werden kann.

Außerdem zeichnet sich das erfindungsgemäße Kugelgelenk dadurch aus, dass das Kugelgelenk einfach in seine Einzelteile zerlegt werden kann, was der Haltbarkeit der Einzelteile sowie der Hantierbarkeit beim Zerlegen des Kugelgelenks zuträglich ist.

Je nach Anwendung sind unterschiedliche Feststellmomente von Kugelgelenken erforderlich. Folglich kann die innenliegende Gelenksfläche auch nicht vollständig formschlüssig an der Gelenkskugel anliegen, wodurch beispielsweise die Gelenkspfanne besonders einfach herstellbar ist. In anderen Ausführungsformen kann jedoch eine Gelenkspfanne vorgesehen sein, die einen sehr engen Formschluss zwischen der Gelenkskugel und der Gelenkspfanne aufweist, um ein besonders hohes Feststellmoment erzielen zu können. Die verfügbare Oberfläche der Gelenkskugel am Gelenkszapfen beschränkt gemeinsam mit dem Grad der Formschlüssigkeit der Gelenkspfanne die gebildete Gelenksfläche und folglich den Grad des Kraftschlusses des Kugelgelenks.

Die Gelenkspfanne weist eine hohlzylindrische Grundform auf. Dabei ist es klar, dass die Grundform in Teilen von der Form eines Hohlzylinders abweichen kann, um beispielsweise dort weitere Funktionen, wie zusätzliche Montage- oder Befestigungspunkte, aber auch weitere Halteflügel zu bilden. Ferner ist es denkbar, dass beispielsweise aufgrund einer gewünschten Gewichts- oder Materialersparnis auf Teile der Oberfläche des Hohlzylinders verzichtet wird und entsprechende Öffnungen vorgesehen sind.

In einem weiteren Aspekt der Erfindung wird erreicht, dass beim Zusammenbau des Kugelgelenks die Einbaurichtung des Gelenkszapfens und die Einbaurichtung der Gelenkspfanne in der gleichen Achse gelegen ist beziehungsweise in die gleiche Richtung orientiert ist. Durch dieses Konzept des Zusammenbaus ergibt sich eine besonders einfache Montage beispielsweise in einem Fahrzeugscheinwerfer. Dabei ist es vorteilhaft, dass das zusammengesetzte Kugelgelenk Druck- und/ oder Zugbelastungen, die in und/ oder entgegen der Einbaurichtung wirken, aufnehmen kann, ohne die Stabilität der Verbindung, die durch das eingebaute Kugelgelenk gebildet ist, innerhalb gewisser Grenzen signifikant zu beeinträchtigen. Das genannte Belastungsprofil kann speziell im Einsatz in Kraftfahrzeugscheinwerfern in hohem Maße auftreten und durch Vibrationen, die bei der Fahrt eines Fahrzeugs oder darin gelegener Motoren entstehen, hervorgerufen werden.

Ferner ist es besonders günstig, wenn nach dem Zusammenbau des Kugelgelenks der Gelenkszapfen an dessen Stirnseite weiterhin zugänglich ist, da dort eine Montageausnehmung beispielsweise in Form einer Schraubenzieher- oder Steckschlüsselaufnahme zur Justierung oder Arretierung des Kugelgelenks vorhanden sein kann.

Federstahl ist ein Stahl, der im Vergleich zu anderen Stählen eine höhere Festigkeit besitzt. Es gibt viele Anwendungen von Federstahl, wie beispielsweise die Federn in Fahrwerken von Kraftfahrzeugen, aber auch die kleine Feder, die Wäscheklammern zusammendrückt. Die Erfindung setzt in einer Weiterentwicklung Federstahl in einer Gelenkspfanne eines Kugelgelenks, das zur Montage eines Fahrzeugscheinwerfers in einem Kraftfahrtzeug verwendet wird, ein.

Grundsätzlich kann jedes Bauteil bis zu einer durch den Werkstoff bestimmten Spannung (Elastizitätsgrenze) verformt werden, um danach ohne bleibende Verformung elastisch in den Ausgangszustand zurückzukehren. Die Werkstoffeigenschaft, die das ermöglicht, ist die Elastizität. Darüber hinausgehende Verformungen führen zu plastischer Deformation.

**Tabelle 1: Federstähle**

| **Benennung** | **Werkstoff Nr.** | **Verwendungsbeispiele** | **Normen** | **alte (DIN)-Bezeichnung** |
|---|---|---|---|---|
| X10CrNi18-8 | 1.4310 | Federblech, Spannhülsen, Tellerfedern usw. | EN 10151 | |
| 38Si7 | 1.5023 | Federringe, Tellerfedern usw. | EN 10089 | |
| 61SiCr7 | 1.7108 | Blattfedern für Fahrzeuge, Schraubenfedern usw. | EN 10089 | 60SiCr7 |
| 52CrMoV4 | 1.7701 | Hoch beanspruchte Federn mit großen Abmessungen | EN 10089 | 51CrMoV4 |
| 51CrV4 | 1.8159 | bei Verschleiß- und Ermüdungsbeanspruchung, z.B. für Spannstifte | EN 10089 | 50CrV4 |
| C67E / C67S | 1.1231 | Präzisionsfedern, Spannstifte | EN 10131 | Ck67 |

| | | | | |
|---|---|---|---|---|
| [Quelle: www.wikipedia.de, Stand 3.8.2016] | | | | |

Beispielsweise hat der Federstahl 38Si7 eine Elastizitätsgrenze von mind. 1150 N/mm² (bei einer Zugfestigkeit von 1300 bis 1600 N/mm²), verglichen mit 235 N/mm² bei dem Baustahl S235JR (Zugfestigkeit 360 N/mm²). Der maßgebliche Unterschied ist hierbei das Streckgrenzenverhältnis, das heißt das Verhältnis von Streckgrenze zu Zugfestigkeit des Werkstoffs, welches bei Federstählen üblicherweise im Bereich von über 85% liegt.

Tabelle 1 zeigt häufig verwendete Federstähle, die das Grundmaterial für den Rohling der Gelenkspfanne des erfindungsgemäßen Kugelgelenks bilden können. Grundsätzlich sind aber auch andere Materialien, wie andere Metalle, Kunststoffe oder Verbundwerkstoffe für die Gelenkspfanne einsetzbar, die für die erfindungsgemäße Herstellung entsprechende Eigenschaften aufweisen. Es ist klar, dass ebenso Materialien geeignet sind, die vorerst weiche, formbare Materialeigenschaften aufweisen und erst durch einen folgenden Prozessschritt in der Herstellung hart und elastisch werden, wie dies bei Verbundmaterialien wie beispielsweise Glasfaser (GFK = glasfaserverstärkter Kunststoff oder englisch GFRP = glass-fibre reinforced plastic) oder Kohlefaser (CFK = carbonfaserverstärkter Kunststoff oder englisch CFRP = carbon-fibre reinforced plastic) gegeben ist.

Durch die Verwendung von Metall als Material für die Gelenkspfanne kann deren Herstellung einfach erfolgen. Folglich kann auf die Anfertigung aufwändiger Werkzeuge, wie beispielsweise Spritzgussformen oder Pressformen, verzichtet werden. Folglich ist das erfindungsgemäße Kugelgelenk durch dessen Konzeption insbesondere für Produktionen mit geringer Stückzahl vorteilhaft einsetzbar, eignet sich aber ebenso für hohe Produktionsvolumina.

Zudem weist das erfindungsgemäße Kugelgelenk den Vorteil auf, dass die Gelenkspfanne einteilig ausgeführt ist und die Herstellungs-, Logistik- und Wartungskosten reduziert werden können. Demzufolge können derartige Gelenkspfannen durch Ausstanzen oder Ausschneiden der Grundform der Gelenkspfanne, in Form eines Rohlings, und anschießendes Einrollen zu einer räumlich Gestalt geformt werden, woraus ersichtlich ist, wie einfach und kostengünstig die Herstellung einer erfindungsgemäßen Gelenkspfanne durchführbar ist.

Genannte Gelenkszapfen sind kommerziell als Standardware erhältlich und weisen beispielsweise am Gelenkszapfen ein Gewinde auf. Solche Gelenkszapfen können derart ausgeführt sein, dass der geometrische Mittelpunkt der Gelenkskugel auf der Verlängerung der gedachten Längsachse des Gelenkschafts gelegen ist. Es ist daher vorteilhaft, wenn das erfindungsgemäße Kugelgelenk die Verwendung solcher Standardware unterstützt. Zusätzlich kann die genannte Standardware ausgeführt sein, sodass die Gelenkskugel auf der Seite, die dem Gelenkschaft abgewandt ist, abgeflacht ist und vorzugsweise eine Montageausnehmung aufweist. Die Montageausnehmung kann beispielsweise eine Montageausnehmung in Form einer Imbus- oder Torx-Öffnung zur Aufnahme eines entsprechenden Schraubenziehers aufweisen, mittels welcher ein auf dem Gelenkschaft befindliches Gewinde beispielsweise in einen Tragrahmen, ein Karosserieteil oder einer anderen Einbaukomponente eines Fahrzeugs verschraubt werden kann.

Das Kugelgelenk umfasst ferner einen Tragrahmen zur Aufnahme der Gelenkspfanne. Dadurch kann das Kugelgelenk eingesetzt werden, um beispielsweise Bauteile, in deren Bauteilgehäuse ein entsprechend vorgesehener Tragrahmen integriert ist, an einer Trägerstruktur zu befestigen, wodurch große Positions- und Bauteilteleranzen aufgefangen werden können. Der Gelenkszapfen soll räumlich auf die Gegebenheiten bei einer Montage beispielsweise bei einem Fahrzeugscheinwerfer einstellbar sein.

Der Tragrahmen umfasst zumindest zwei Stege, vorzugsweise zumindest drei Stege, die entlang des Umfangs der Öffnung des Tragrahmens angeordnet sind und sich in axialer Richtung erstrecken und durch zumindest einen Stegverbinder miteinander verbunden sind. Dabei sind die innenliegenden Oberflächen der zumindest zwei Stege und/oder des zumindest einen Stegverbinders bezüglich der außenliegenden Oberfläche der Gelenkspfanne zumindest teilweise komplementär geformt ausgebildet und eingerichtet, die Gelenkspfanne abzustützen. Dadurch wird erreicht, dass die Stabilität der Verbindung zwischen der Gelenkspfanne und dem Tragrahmen verbessert wird.

Entlang des Umfangs der hohlzylindrischen Gelenkspfanne sind zumindest zwei hintere Halteflügel angeordnet, die gegen die Einbaurichtung der Gelenkspfanne orientiert sind und radial von der gedachten Längsachse der Gelenkspfanne weg geneigt sind und die zumindest zwei hinteren Halteflügel eingerichtet sind, ein Verrutschen der Gelenkspfanne im Tragrahmen in Einbaurichtung der Gelenkspfanne zu verhindern. Durch diese Maßnahme kann erreicht werden, dass die Gelenkspfanne in beziehungsweise mit dem Tragrahmen befestigt wird und sichergestellt ist, dass die Gelenkspfanne nicht zu tief im Tragrahmen hineingedrückt werden kann.

Ferner sind entlang des Umfangs der hohlzylindrischen Gelenkspfanne zumindest zwei vordere Halteflügel angeordnet, die gegen die Einbaurichtung der Gelenkspfanne orientiert sind und radial von der gedachten Längsachse der Gelenkspfanne weg geneigt sind, bevorzugt normal zur gedachten Längsachse der Gelenkspfanne orientiert sind, und die zumindest zwei vorderen Halteflügel eingerichtet sind, ein Verrutschen der Gelenkspfanne im Tragrahmen entgegen der Einbaurichtung der Gelenkspfanne zu verhindern. Durch diese Maßnahme kann erreicht werden, dass die Gelenkspfanne in beziehungsweise mit dem Tragrahmen befestigt wird und "verrastet", das heißt, dass sichergestellt ist, dass die Gelenkspfanne nicht wieder aus dem Tragrahmen herausfallen kann. Die so gewonnene Selbsthaltekraft der Gelenkspfanne im Tragrahmen wird dadurch erreicht, dass die vorderen und hinteren Halteflügel gegeneinander orientiert sind und dazwischen der Tragrahmen dadurch eingespannt wird, indem eine Federkraft, die insbesondere durch die vorderen Halteflügel erzeugt wird, gegen den Tragrahmen und die an diesen anliegenden hinteren Halteflügel wirkt.

Mit anderen Worten erlaubt die Fixierung durch die beziehungsweise zwischen den vorderen und hinteren Halteflügeln mittels einer Klemmverbindung einen besonders einfachen und kostengünstigen Einbau der Gelenkspfanne in den Tragrahmen.

Erfindungsgemäße Gelenkspfannen können durch Aussägen, Ausstanzen oder Ausschneiden der Grundform der Gelenkspfanne, dem Rohling, und anschießendes Einrollen zu einer räumlich geformten Gestalt gefertigt werden, wobei es besonders vorteilhaft ist, wenn sich die Gelenksflügel und/ oder die Halteflügel axial streifenförmig, vorzugsweise als schmale Streifen erstrecken. Dadurch kann die Grundform der Gelenkspfanne besonders leicht eingerollt werden. Schmale Streifen weisen im Vergleich zu deren Länge eine geringe Breite auf, beispielsweise ein Verhältnis von Breite zu Länge von 1:3 oder 1:5 oder auch mehr.

In einem weiteren Aspekt der Erfindung ist es vorteilhaft, wenn der Durchmesser der Gelenkskugel vorzugsweise größer ist als der radiale Durchmesser des Gelenkschafts, und
ein Übergang zwischen dem Gelenkschaft und der Gelenkskugel vorzugsweise durch eine entlang des Umfangs der Gelenkspfanne verlaufende konkave Fläche gebildet ist, und
auf der Oberfläche des Gelenkszapfens zwischen Gelenkschaft und Gelenkskugel eine entlang des Umfangs der Gelenkspfanne verlaufende Gelenkskante ausgebildet ist, wobei die Gelenkskante vorzugsweise durch eine Schnittkurve der im Wesentlichen konvexen Oberfläche der Gelenkskugel und der konkaven Fläche des Übergangs vom Gelenkschaft zur Gelenkskugel gebildet ist, und
sich die hinteren Gelenksflügel in einem unverstellten Zustand, in dem eine gedachte Längsachse des Gelenkszapfens mit einer gedachten Längsachse der Gelenkspfanne übereinstimmt, zumindest bis zur Gelenkskante erstrecken.

Durch das erfindungsgemäße Kugelgelenk wird erreicht, dass dessen Feststellmoment maximiert wird, indem die maximal verfügbare Oberfläche der Gelenkskugel zur Ausbildung des Kugelgelenks herangezogen wird und die Gelenksflügel die Kugel möglichst großflächig umschließen.

Um dies zu erreichen, weist der Gelenkszapfen zwischen der Gelenkskugel und dem Gelenkschaft eine Gelenkskante auf, die den räumlich drehbaren Bereich der Verbindung zwischen Gelenkskugel und Gelenkspfanne begrenzt, bis zu der die Gelenksflügel der Gelenkspfanne im unverstellten Zustand reichen. Durch die axiale Länge der Gelenksflügel kann die wirksame Gelenksfläche des Kugelgelenks, das durch die miteinander wirkenden Flächen des Gelenkskugel und der Gelenkspfanne bestimmt ist, optimal genutzt werden. Ein besonders hohes Feststellmoment eines Kugelgelenks kann erreicht werden.

Die wirksame Gelenksfläche des Kugelgelenks kann besonders vorteilhaft genützt werden, wenn die Gelenkskante durch eine Schnittkurve der im Wesentlichen konvexen Oberfläche der Gelenkskugel und der konkaven Fläche des Übergangs vom Gelenkschaft zur Gelenkskugel ausgebildet ist.

Es ist günstig, wenn die Gelenkspfanne einteilig aus einem ebenen und bevorzugt aus einem metallischen Material, besonders bevorzugt aus Stahlblech, gefertigt ist und bevorzugt eine Materialstärke zwischen 0,1 mm und 1 mm, besonders bevorzugt zwischen 0,2 mm und 0,5 mm aufweist. Durch eine entsprechende Materialstärke kann erreicht werden, dass die Gelenkspfanne über eine hinreichende Elastizität bei gleichzeitig hoher Festigkeit verfügt, sowie ein sehr geringes Gewicht und Volumen aufweist.

Es ist sehr vorteilhaft, wenn die Gelenkspfanne durch Einrollen eines vorgeschnittenen ebenen Materials gefertigt ist. Dabei ist es günstig, wenn die Gelenkspfanne zumindest zwei zueinander komplementär geformte Ausrichtelemente, umfasst, die entlang des Umfangs der Gelenkspfanne angeordnet sind und eingerichtet sind, ineinander zu greifen. Dadurch wird gewährleistet, dass die Gelenkspfanne eine in sich stabile Form aufweist, die für eine präzise Aufnahme der Gelenkskugel eingerichtet ist, sowie insbesondere die Torsionssteifigkeit der Gelenkspfanne verbessert. Die Form der Ausrichtelemente kann beispielsweise rund, eckig oder zungenförmig sein. Falls es der gewünschten Stabilität der Gelenkspfanne zweckdienlich ist, können auch mehrere Ausrichtelemente zur Anwendung kommen.

In einem zusätzlichen Aspekt der Erfindung ist es vorteilhaft, wenn die hohlzylindrische Gelenkspfanne an der in Einbaurichtung vorne liegenden Stirnseite offen ist. Durch die Öffnung ist eine in der Gelenkskugel befindliche eine Montageausnehmung in Form einer Imbus- oder Torx-Öffnung zugänglich und der Montagezapfen kann in zusammengebautem Zustand des Kugelgelenks beispielsweise mittels eines Gewindes, das sich auf dem Gelenkszapfen befindet, in eine fahrzeugseitige Halterung geschraubt werden.

In einem besonders vorteilhaften Aspekt der Erfindung kann das Kugelgelenk an oder innerhalb eines Fahrzeugscheinwerfers angeordnet und dazu eingerichtet sein, den Fahrzeugscheinwerfer in einer Einbaulage zu fixieren oder Scheinwerferkomponenten im Scheinwerfer einstellbar zu befestigen. Das erfindungsgemäße Kugelgelenk ist insbesondere dafür geeignet, in einem Fahrzeugscheinwerfer Teile zu verbinden und teils hohe Einbautoleranzen zu überwinden und auszugleichen, was derart geschieht, dass das Kugelgelenk erst nach Befestigung der Teile an einem Fahrzeugscheinwerfer fixiert wird.

In einem zusätzlichen Aspekt der Erfindung kann ein Fahrzeugscheinwerfer, insbesondere zur Erzeugung einer Fernlicht- und/ oder einer Abblendlicht-Lichtverteilung, mit zumindest einem erfindungsgemäßen Kugelgelenk zum Einbau des Fahrzeugscheinwerfers in einem Kraftfahrzeug versehen sein, wobei das Kugelgelenk eine fahrzeugseitig gelegene Trägereinheit mit dem Fahrzeugscheinwerfer verbindet. Das erfindungsgemäße Kugelgelenk ist insbesondere auch dafür geeignet, einen Fahrzeugscheinwerfer an einer fahrzeugseitigen Halterung zu fixieren, um die teils hohen Einbautoleranzen auszugleichen bzw. ein in einem Tragrahmen befestigtes Scheinwerfermodul mit dem Scheinwerfergehäuse einstellbar zu verbinden.

In einem weiteren Aspekt der Erfindung kann ein Fahrzeugscheinwerfer, insbesondere zur Erzeugung einer Fernlicht- und/oder einer Abblendlicht-Lichtverteilung, mit zumindest einem erfindungsgemäßen Kugelgelenk versehen sein, wobei das Kugelgelenk ein vorzugsweise festes Bein bildet, das zusammen mit zwei weiteren verstellbaren Beinen eine Dreipunktaufhängung zur Befestigung einer Leuchteinrichtung des Fahrzeugscheinwerfers an einer Fahrzeugscheinwerferkomponente oder eines Karosserieteils des Kraftfahrzeugs bildet. Dadurch kann eine Justierbewegung der Dreipunktaufhängung erreicht werden, um die Leuchteinrichtung beispielsweise auf gesetzliche Einbauvorschriften anzupassen.

Die erfindungsgemäße Aufgabe wird ferner dadurch gelöst, dass ein Verfahren zur Herstellung einer Gelenkspfanne für ein Kugelgelenk vorgeschlagen wird, das folgende Verfahrensschritte umfasst:
- Zuschneiden eines Rohlings der Gelenkspfanne aus einem ebenen Material, wobei der vollständige Zuschnitt des Rohlings in einer Schnittebene erfolgt;
- Biegen von Bereichen des Rohlings, die insbesondere die Gelenksflügel, und/ oder die Halteflügel, der Gelenkspfanne bilden, quer zur Schnittebene;
- Formen des Rohlings, sodass die Gelenkspfanne durch Einrollen des Rohlings um die gedachte Längsachse der Gelenkspfanne gebildet wird.

Dadurch kann eine besonders einfache und kostengünstige Herstellung der Gelenkspfanne erreicht werden, da die Gelenkspfanne zunächst aus einem ebenen Material geschnitten, beispielsweise durch Sägen, Stanzen, (Laser-) Schneiden und anschließend eingerollt werden kann, um die räumlich Form der Gelenkspfanne zu bilden.

Die Ausbildung von Gelenksflügeln beziehungsweise Halteflügeln kann erfolgen, indem deren Konturen aus dem Rohling zugeschnitten werden und diese anschließend aus der Schnittebene, in der der Rohling gelegen ist, herausgebogen werden, sodass die Flügel über die Ebene hinaus gedrückt werden. Dabei werden die Gelenksflügel in die entgegengesetzte Richtung zu jener der Halteflügel gebogen, was zwei getrennte Prozessschritte erfordern kann. Hier ist es klar, dass all jene Flügel, die letztendlich in derselben Richtung orientiert sein sollen, im gleichen Prozessschritt gebogen werden können. Grundsätzlich kann das Biegen quer zur Schnittebene in zwei entgegengesetzte Richtungen aber auch in einem einzigen Prozessschritt erfolgen.

Beim Zuschneiden des Rohlings kann ferner berücksichtigt werden, dass weitere Teile aus dem Rohling herausgeschnitten werden, um beispielsweise Gewicht oder Material einzusparen.

In der Herstellung ist eine metallische Gelenkspfanne für verschiedene Bearbeitungsmethoden wie Stanzen oder Laserschneiden geeignet, die die Fertigung in jeweils unterschiedlicher Präzision erlauben. Die unterschiedlichen Bearbeitungsmethoden erlauben ferner eine Anpassung an sehr unterschiedliche Produktionsvolumina, um die jeweiligen Kostenvorteile nützen zu können. Das erfindungsgemäße Kugelgelenk weist ein fehlertolerantes Design auf, wodurch die Flexibilität, zwischen einer Prototypenherstellung und einer Großserienherstellung das Herstellungsverfahren für die gleiche Gelenkspfanne wechseln zu können, ein entscheidender Vorteil ist.

Durch die Konzipierung der Bauform der erfindungsgenäßen Gelenkspfanne, sowie durch die zwei genannten, voneinander unabhängigen Herstellungsschritte des Zuschneidens und des Biegens kann erreicht werden, dass beispielsweise eine niedrige Genauigkeit beim Zuschneiden, beispielsweise beim Stanzen des Rohlings aus einer Metallplatte, durch eine hohe Genauigkeit bei Biegen ausgeglichen wird.

Es kann ferner dieselbe Stanzform oder dasselbe Steuerprogramm für einen Laserzuschnitt des Rohlings für eine Gelenkspfanne verwendet werden, um unterschiedliche Stärken des Rohlings insbesondere aus Metall zu bearbeiten, wobei die Stanzform oder das Steuerprogramm beispielsweise auf eine maximal zulässige Materialstärke in der Bearbeitung angepasst sein kann. Durch Anpassung des Hubs quer zur Schnittebene beim nachfolgenden Biegen können unterschiedliche Federkräfte für die Gelenkspfanne erzielt werden, die gemäß unterschiedlicher Anforderungen in verschiedenen Anwendungen der Kugelgelenke angepasst werden. Je nach eingesetztem Material sind die gewünschten Federkräfte sehr exakt einstellbar, die überdies hinaus über eine sehr lange Betriebszeit sehr konstant sein können.

Eine Weiterentwicklung des Verfahrens zur Herstellung einer erfindungsgemäßen Gelenkspfanne für ein Kugelgelenk umfasst folgenden Schritt:
- Verbinden beziehungsweise ringförmiges Schließen des geformten Rohlings, sodass zumindest zwei zueinander komplementär geformten Ausrichtelemente ineinander greifen.

Die Verwendung von Ausrichtelementen, die jeweils an zwei Enden des Rohlings angeordnet sind, erlaubt eine präzise Ausrichtung der beiden Enden des eingerollten Rohlings. Dadurch wird nicht nur eine höhere Präzision des Werkstücks erzielt, sondern die Gelenkspfanne auch stabiler in Bezug auf Scherkräfte. Zusätzlich kann die Gelenkspfanne besser in eine trägerseitig, das heißt am Tragrahmen angeordneten Haltestrukturen, wie Stege oder Stegverbinder, eingepasst werden, die zueinander komplementär sein können, um die Steifigkeit auf Zug oder Druck, die Torsionssteifigkeit und außerdem die präzise Ausrichtung der Gelenkspfanne innerhalb des Tragrahmens zu verbessern. Dieser Aspekt ist für die Anwendung ein einem Fahrzeugscheinwerfer durchaus wichtig, das Betriebseinflüsse wie Vibrationen oder Temperaturschwankungen die Festigkeit der Verbindung, die durch das Kugelgelenk gebildet ist, ungünstig beeinflussen können.

Es ist für das genannte Verfahren vorteilhaft, wenn das Zuschneiden des Rohlings durch Laserschneiden oder Stanzen erfolgt, die diese Schneideverfahren sowohl für eine Kleinserienfertigung als auch eine Massenfertigung kostengünstig anwendbar sind.

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in:
- Fig. 1: eine perspektivische Explosionsansicht eines erfindungsgemäßen Kugelgelenks von oben,
- Fig. 2: eine perspektivische Explosionsansicht des Kugelgelenks von der Seite,
- Fig. 3: eine perspektivische Ansicht einer erfindungsgemäßen Gelenkspfanne,
- Fig. 4: eine Seitenansicht der Gelenkspfanne,
- Fig. 5: eine Ansicht von oben auf das Kugelgelenk,
- Fig. 6: eine Ansicht des Kugelgelenks in der Schnittebene A-A gemäß Fig. 5,
- Fig. 7: eine Ansicht des Kugelgelenks in der Schnittebene B-B gemäß Fig. 5,
- Fig. 8: eine Ansicht von unten auf die Gelenkspfanne,
- Fig. 9: eine Ansicht der Gelenkspfanne in der Schnittebene C-C gemäß Fig. 8,
- Fig. 10: eine Ansicht auf die Gelenkspfanne nach Fig. 9 in der Schnittebene C-C gemäß Fig. 8,
- Fig. 11: eine Ansicht von oben auf einen Tragrahmen und die Gelenkspfanne,
- Fig. 12: eine Seitenansicht auf den Tragrahmen und die Gelenkspfanne in der Schnittebene D-D gemäß Fig. 11,
- Fig. 13: eine Ansicht von oben auf einen Rohling für die Gelenkspfanne,
- Fig. 14: eine Ansicht der Gelenkspfanne jeweils nach den einzelnen Herstellungsschritten,
- Fig. 15: eine Vorderansicht eines Fahrzeugscheinwerfers mit einem Lichtmodul,
- Fig. 16: eine Explosionsdarstellung des Lichtmoduls von hinten,
- Fig. 17: eine perspektivische Ansicht des Lichtmoduls von hinten.

Die Figuren zeigen ein Ausführungsbeispiel für ein erfindungsgemäßes Kugelgelenk. Es ist klar, dass nicht immer alle gezeigten Merkmale für jede Anwendung erforderlich sein müssen und folglich eine beliebige Kombination der Merkmale untereinander ebenso Gegenstand der vorliegenden Erfindung ist. Mit anderen Worten ergibt es sich aus den Anforderungen der jeweiligen Anwendung des Kugelgelenks, ob alle oder nur einzelne Merkmale in einer gewünschten Ausführungsform enthalten sind.

Es ist auch klar, dass die im Ausführungsbeispiel gezeigten Merkmale in ähnlicher oder anderer Form ausgeführt werden können, um die gleiche Wirkung zu erzielen. Daher ist es nicht wesentlich, ob beispielsweise einzelne Konturen in eckiger oder abgerundeter Form verwirklicht sind oder die einzelnen Elemente eine bestimmte Länge, Breite oder Neigungswinkel in Bezug auf die Geometrie aufweisen.

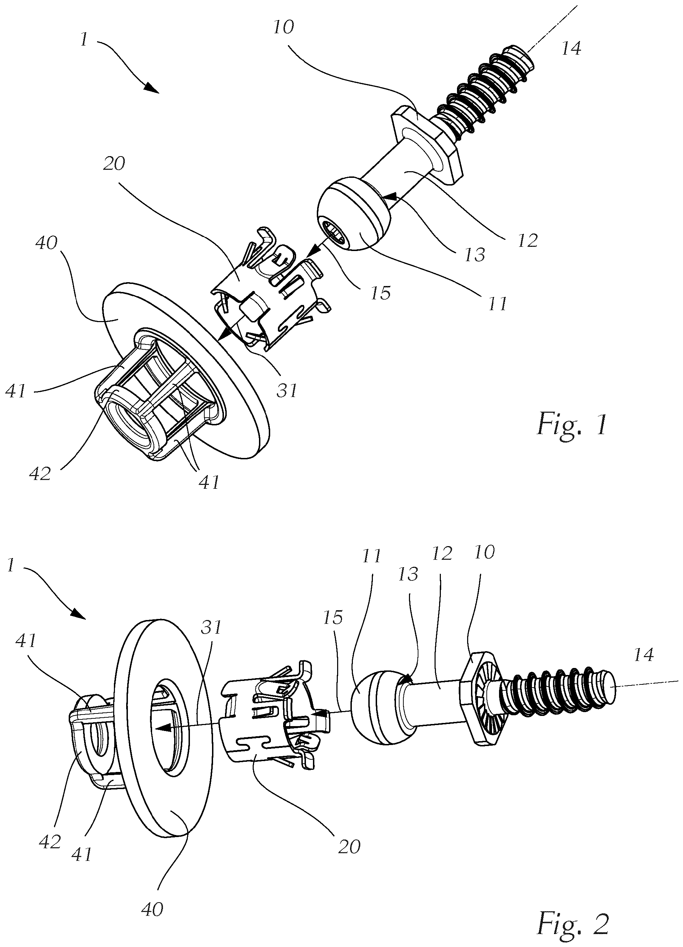

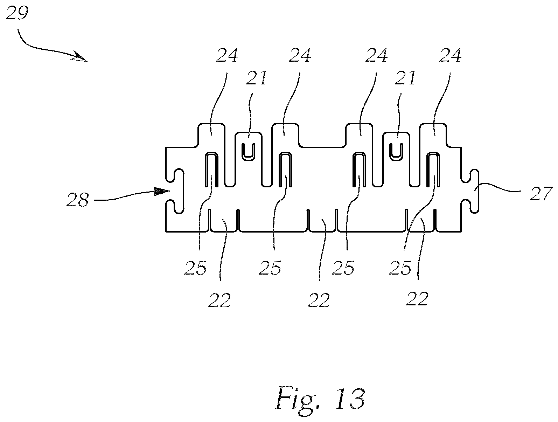

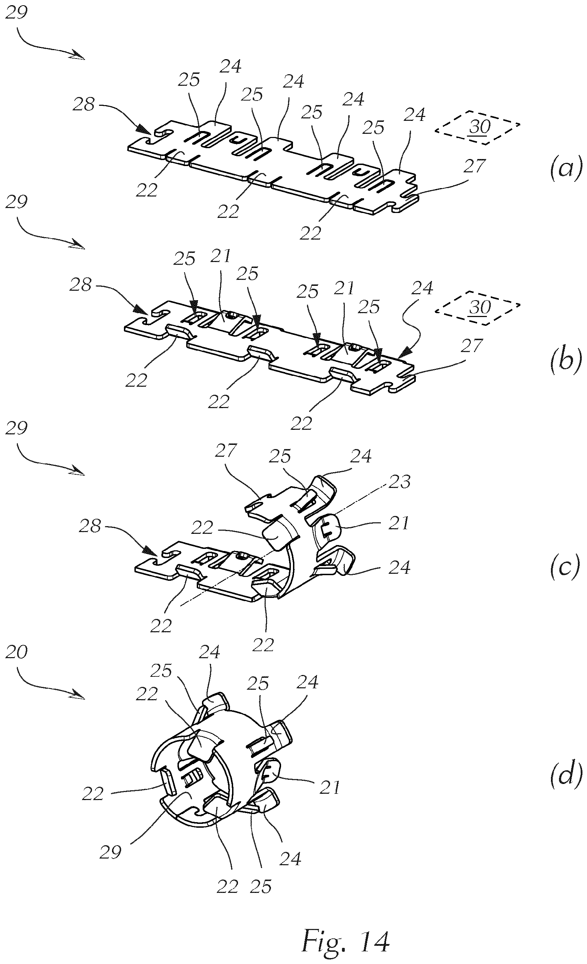

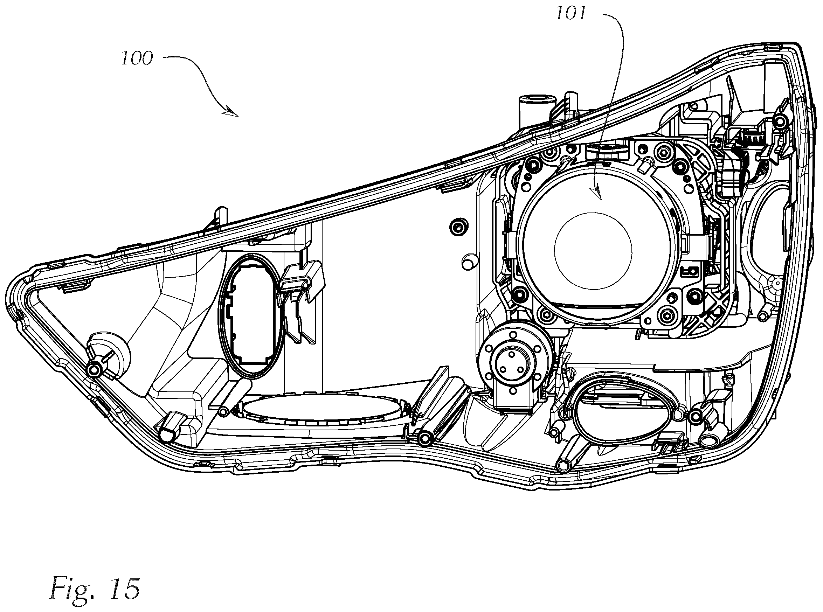

Die **Figuren 1** bis **12** zeigen ein erfindungsgemäßes Kugelgelenk für einen Fahrzeugscheinwerfer beziehungsweise dessen Komponenten, die **Figuren 13** und **14** illustrieren ein Herstellungsverfahren zur Erzeugung einer Gelenkspfanne für ein Kugelgelenk. Die **Figuren 15** bis **17** zeigen ein Lichtmodul eines Fahrzeugscheinwerfers, das ein erfindungsgemäßes Kugelgelenk für eine Dreipunktaufhängung aufweist.

In **Fig. 1** und **Fig. 2** ist ein Kugelgelenk 1 dargestellt, das einen Gelenkszapfen 10, eine Gelenkspfanne 20 sowie einen Tragrahmen 40 umfasst. Es ist die Einbaurichtung 15 erkennbar, in der der Gelenkszapfen 10 in die Gelenkspfanne 20 eingesetzt werden kann, sowie die Einbaurichtung 31, in der die Gelenkspfanne 20 in den Tragrahmen 40 eingesetzt werden kann.

Das Kugelgelenk 1 umfasst einen Gelenkszapfen 10, der eine Gelenkskugel 11 umfasst, die auf einer Seite in eine Stirnseite eines im Wesentlichen zylindrisch geformten Gelenkschafts 12 übergeht.

Das Kugelgelenk 1 umfasst folglich eine Gelenkspfanne 20 zur Aufnahme der Gelenkskugel 11, wobei die Gelenkspfanne 20 eine hohlzylindrische Grundform aufweist und aus einem federnd elastischen Metall, vorzugsweise aus Federstahl besteht.

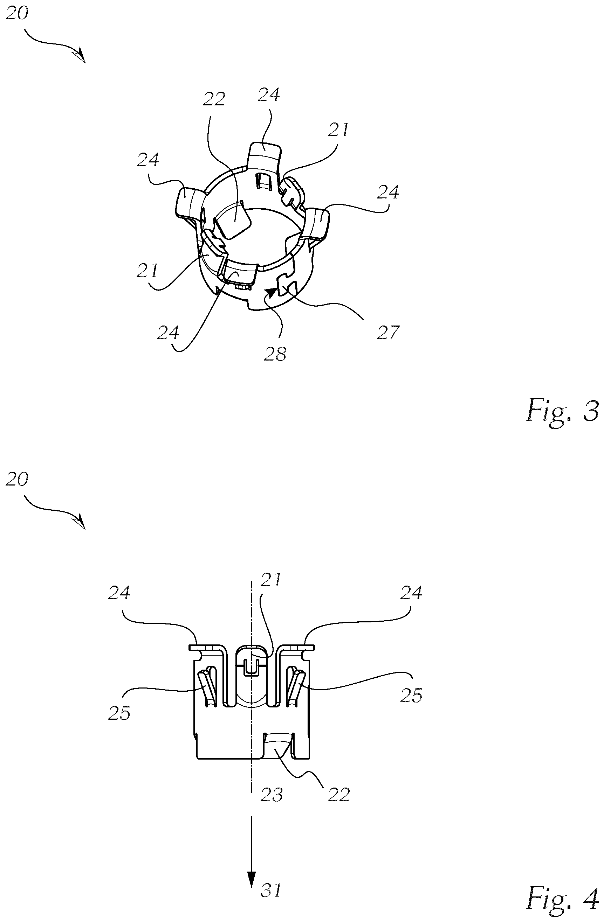

Die Gelenkspfanne 20 ist detailliert in **Fig. 3** und **Fig. 4** gezeigt. Bei der Gelenkspfanne 20 sind entlang des Umfangs der hohlzylindrischen Gelenkspfanne 20 zwei hintere Gelenksflügel 21 ausgebildet, die gegen die Einbaurichtung 15 des Gelenkszapfens 10 orientiert sind und radial zur gedachten Längsachse 23 der Gelenkspfanne 20 geneigt sind.

Auf der Gelenkspfanne 20 sind ferner entlang des Umfangs der hohlzylindrischen Gelenkspfanne 20 drei vordere Gelenksflügel 22 ausgebildet, die in Einbaurichtung 15 des Gelenkszapfens 10 orientiert sind und radial zur gedachten Längsachse 23 der Gelenkspfanne 20 geneigt sind

Die zwei hinteren Gelenksflügel 21 und die drei vorderen Gelenksflügel 22 bilden zumindest teilweise eine innenliegende Gelenksfläche des Kugelgelenks 1, die im zusammengebauten Zustand des Kugelgelenks 1 an der Gelenkskugel 11 anliegt. In diesem Ausführungsbeispiel liegt die innenliegende Gelenksfläche nicht vollständig formschlüssig an der Gelenkskugel 11 an, wodurch die Gelenkspfanne 20 besonders einfach herstellbar ist. In anderen Ausführungsformen kann jedoch eine Gelenkspfanne 20 vorgesehen sein, die einen deutlich engeren Formschluss zwischen der Gelenkskugel 11 und der Gelenkspfanne 20 aufweist.

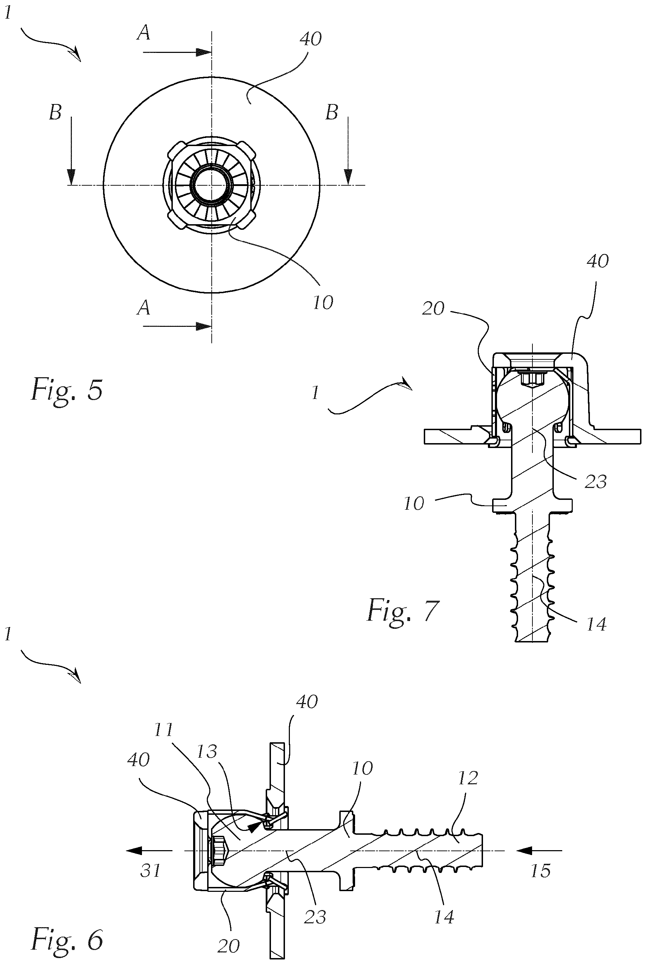

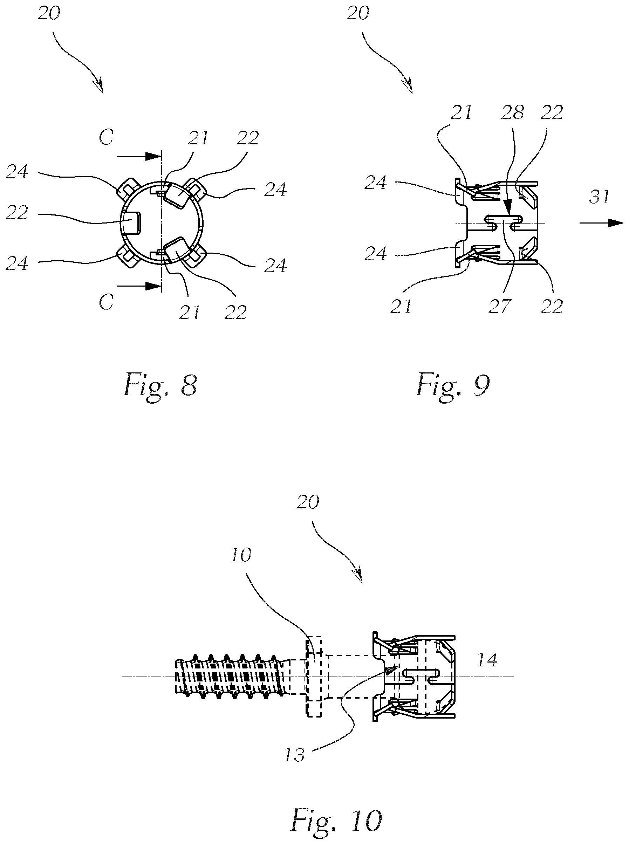

In den **Fig. 5, Fig. 6** und **Fig. 7** ist unter anderem dargestellt, wie die Elemente der Gelenkspfanne 20 in den Tragrahmen 40 und auf die Gelenkskugel 11 eingreifen. Es ist unter Zuhilfenahme der detaillierten Darstellung der Gelenkspfanne 20 in der **Fig. 8, Fig. 9** und **Fig. 10** erkennbar, wie der Tragrahmen 40 des Kugelgelenks 1 zur Aufnahme der Gelenkspfanne 20 zumindest teilweise die zwei hinteren Gelenksflügel 21 der Gelenkspfanne 20 umschließt.

Fig. 10 zeigt einen in die Gelenkspfanne 20 eingesetzten Gelenkszapfen 10 in strichlierter Form angedeutet in einer Schnittebene C-C nach Fig. 8. Es ist eine Gelenkskante 13 eines Gelenkszapfens erkennbar (siehe auch Fig. 1 und Fig. 6). Ferner ist erkennbar, dass die Gelenkskante 13 die Gelenksfläche der Gelenkskugel 11 begrenzt und dass die Gelenkspfanne 20 sich über die Gelenkskante 13 hinaus erstreckt und folglich eine sehr hohe Festhaltekraft des festgemachten Kugelgelenks 1 erzielt werden kann, auch wenn eine gedachte Längsachse 14 des Gelenkszapfens 10 nicht einer gedachten Längsachse 23 der Gelenkspfanne 20 entspricht, das heißt, wenn der Gelenkszapfen 10 und die Gelenkspfanne 20 zueinander einen Winkel aufweisen, um beispielsweise eine Montagetoleranz zwischen dem Tragrahmen 40 und einem Fahrzeugscheinwerfer, der mittels dem Kugelgelenk 1 montiert ist, auszugleichen.

Auf der Oberfläche des Gelenkszapfens 10 zwischen Gelenkschaft 12 und Gelenkskugel 11 kann, wie erwähnt, optional eine entlang des Umfangs der Gelenkspfanne 20 verlaufende Gelenkskante 13 ausgebildet sein, wobei die Gelenkskante 13 vorzugsweise durch eine Schnittkurve der im Wesentlichen konkaven Oberfläche der Gelenkskugel 11 und der konvexen Fläche des Übergangs vom Gelenkschaft 12 zur Gelenkskugel 11 gebildet ist. Die Festhaltekraft des Kugelgelenks 1 kann besonders groß sein, wenn sich die hinteren Gelenksflügel 21 in einem unverstellten Zustand, in dem eine gedachte Längsachse 14 des Gelenkszapfens 10 mit einer gedachten Längsachse 23 der Gelenkspfanne 20 übereinstimmt, zumindest bis zur Gelenkskante 13 erstrecken.

Die zwei hinteren Gelenksflügeln 21 werden durch Federkraft an die Gelenkskugel 11 gedrückt.

Zur Befestigung der Gelenkspfanne 20 mit dem Tragrahmen 40 sind entlang des Umfangs der hohlzylindrischen Gelenkspfanne 20 vier hintere Halteflügel 24 angeordnet, die gegen die Einbaurichtung 31 der Gelenkspfanne 20 orientiert sind und radial von der gedachten Längsachse 23 der Gelenkspfanne 20 weg geneigt sind und die vier hinteren Halteflügel 24 sind eingerichtet, ein Verrutschen der Gelenkspfanne 20 im Tragrahmen 40 in Einbaurichtung 31 der Gelenkspfanne 20 zu verhindern. Dadurch kann verhindert werden, dass die Gelenkspfanne 20 nicht zu tief in den Tragrahmen 40 gedrückt werden kann.

Ferner sind zur Befestigung der Gelenkspfanne 20 mit dem Tragrahmen 40 entlang des Umfangs der hohlzylindrischen Gelenkspfanne 20 vier vordere Halteflügel 25 angeordnet, die gegen die Einbaurichtung 31 der Gelenkspfanne 20 orientiert sind und normal zur gedachten Längsachse 23 der Gelenkspfanne 20 orientiert sind, und die vier vorderen Halteflügel 25 eingerichtet sind, ein Verrutschen der Gelenkspfanne 20 im Tragrahmen 40 entgegen der Einbaurichtung 31 der Gelenkspfanne 20 zu verhindern. Dadurch kann verhindert werden, dass die Gelenkspfanne 20 nicht wieder aus dem Tragrahmen 40 gezogen werden kann.

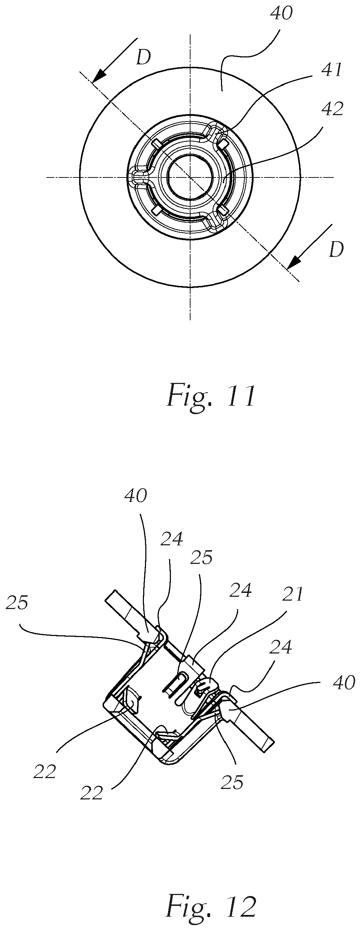

**Fig. 11** zeigt eine Draufsicht auf den Tragrahmen 40, in den eine Gelenkspfanne 20 eingesetzt ist. Ferner ist eine Schnittebene D-D zu erkennen, deren Ansicht in der **Fig. 12** zu sehen ist. Deutlich sind die vorderen Halteflügel 25 und hinteren Halteflügel 24 zu erkennen, die die Gelenkspfanne 20 im Tragrahmen 40 einklemmen. Dadurch ist für einen festen Halt gesorgt, der sowohl in Zug- als auch in Druckrichtung einen Anschlag bezüglich des Tragerahmens 40 vorsieht. Es ist ferner erkennbar, dass der Tragrahmen 40 des Kugelgelenks 1 zur Aufnahme der Gelenkspfanne 20 zumindest teilweise die zwei hinteren Gelenksflügel 21 der Gelenkspfanne 20 umschließt, womit das sogenannte "auffedern" der Gelenksflügel verhindert werden kann.

Außerdem ist in Fig. 11 und Fig. 12 zu erkennen, dass der Tragrahmen 40 in diesem Ausführungsbeispiel drei Stege 41, die entlang des Umfangs der Öffnung des Tragrahmens 40 angeordnet sind und sich in axialer Richtung erstrecken und durch einen Stegverbinder 42 miteinander verbunden sind, umfasst. Dabei sind die innenliegenden Oberflächen der drei Stege 41 und/ oder des Stegverbinders 42 bezüglich der außenliegenden Oberfläche der Gelenkspfanne 20 zumindest teilweise komplementär geformt ausgebildet und eingerichtet, die Gelenkspfanne 20 abzustützen. Diese Anordnung dient der Stabilisierung der Verbindung zwischen dem Gelenkspfanne 20 und dem Tragrahmen 40. Die drei Stege 41 sind im Wesentlichen parallel zur Einbaurichtung der Gelenkspfanne 31 orientiert. Es ist dabei nicht wesentlich, ob die Stege 41 tatsächlich parallel zur Einbaurichtung der Gelenkspfanne 31 orientiert sind. Es ist jede Ausführung der Stege 41 möglich, die dazu dient, die hohlzylindrische Gelenkspfanne 20 abzustützen. Die Stege 41 sind ist in diesem Beispiel an deren Enden über einen kreisförmigen Stegverbinder 42 untereinander verbunden, um weiter die Stabilität beziehungsweise die Abstützung der Gelenkspfanne 20 zu verbessern. Die Stege 41 und der Stegverbinder 42 formen eine Struktur, die eingerichtet ist, die hohlzylindrische Grundform der Gelenkspfanne 20 aufzunehmen und deren Halt in der Einbauposition zu verbessern. Dadurch können auf die Gelenkspfanne einwirkende Scherkräfte, die durch den Gelenkszapfen oder auch durch den Tragrahmen induziert werden können, reduziert werden.

Um eine hohe Feststellkraft zwischen der Gelenkskugel 11 und der Gelenkspfanne 20 zu erreichen, ist es günstig, wenn der Durchmesser der Gelenkskugel 11 größer als der radiale Durchmesser des Gelenkschafts 12 ist. Dabei kann ein Übergang zwischen dem Gelenkschaft 12 und der Gelenkskugel 11 durch eine entlang des Umfangs der Gelenkspfanne 20 verlaufende konkave Fläche gebildet sein.

In der Praxis ist es besonders günstig, wenn die Gelenkspfanne 20 einteilig aus einem ebenen und metallischen Material, vorzugsweise aus Stahlblech Typ 1.4310, gefertigt ist und bevorzugt eine Materialstärke zwischen 0,1 mm und 1 mm, besonders bevorzugt zwischen 0,3 mm und 0,7 mm aufweist, beispielsweise 0,5 mm.

In einem weiteren Aspekt der Erfindung zeigen Fig. 3 und Fig. 9 die Gelenkspfanne 20, die ferner zwei zueinander komplementär geformte Ausrichtelemente 27, 28 umfasst, die entlang des Umfangs der Gelenkspfanne 20 angeordnet sind und eingerichtet sind, ineinander zu greifen.

Das Kugelgelenk 1 ist speziell dafür geeignet und vorgesehen, an einem oder innerhalb eines Fahrzeugscheinwerfers angeordnet zu sein und ist dazu eingerichtet, den Fahrzeugscheinwerfer in einer Einbaulage zu fixieren.

Das Kugelgelenk 1 ist besonders bevorzugt dafür geeignet und vorgesehen, in eine fahrzeugseitig gelegene Trägereinheit eingebaut zu werden, wobei das Kugelgelenk 1 die Trägereinheit mit dem Fahrzeugscheinwerfer verbindet, wobei der Fahrzeugscheinwerfer, insbesondere zur Erzeugung einer Fernlicht- und/ oder einer Abblendlicht-Lichtverteilung, vorgesehen ist oder ein in einem Tragrahmen befestigtes Scheinwerfermodul mit dem Scheinwerfergehäuse einstellbar zu verbinden.

In **Fig. 13** ist ein bereits ausgeschnittener Rohling 29 gezeigt, aus dem eine erfindungsgemäße Gelenkspfanne gebildet werden kann. Es sind die drei vorderen Gelenksflügel 22, die zwei hinteren Gelenksflügel 21, die vier hinteren Halteflügel 24, die vier vorderen Halteflügel 25 sowie die beiden Ausrichtelemente 27, 28 erkennbar. Der Schneidevorgang kann durch Stanzen, Sägen oder Schneiden, bevorzugt Laserschneiden, aber grundsätzlich auch jedem anderen formgebenden Verfahren erfolgen.

Innerhalb der zwei hinteren Gelenksflügel 21 sind ausgeschnittene, u-förmige Konturen erkennbar, die dazu dienen, eine zusätzliche Krümmung der hinteren Gelenksflügel 21 zu erleichtern, indem der Materialquerschnitt in den hinteren Gelenksflügeln 21 durch den u-förmigen Ausschnitt zum leichteren Biegen verringert wird. Diese zusätzliche Krümmung der hinteren Gelenksflügel 21 ist in der Gelenkspfanne 20 in radialer Richtung nach außen hin orientiert, erlaubt durch die Reduktion des Materialquerschnitts einen sehr engen Biegeradius und erleichtert letztendlich das Einsetzen einer Gelenkskugel 11 in die Gelenkspfanne 20.

Ferner sind die zwei zueinander komplementär geformten Ausrichtelemente 27, 28 erkennbar, die dafür sorgen, dass die Gelenkspfanne im gefertigten Zustand mechanisch stabil und präzise justiert ist.

**Fig. 14** zeigt ein erfindungsgemäßes Verfahren zur Herstellung einer Gelenkspfanne 20 für ein Kugelgelenk 1, das folgende Schritte umfasst:
In **Fig. 14a** ist der erste Verfahrensschritt dargestellt, das heißt das Zuschneiden des Rohlings 29 der Gelenkspfanne 20 aus einem ebenen Material, das in der Ebene 30 gelegen ist, wobei der vollständige Zuschnitt des Rohlings 29 in einer Ebene 30 erfolgt und vorzugsweise durch Laserschneiden oder Stanzen erfolgt.

In **Fig. 14b** ist der zweite Verfahrensschritt dargestellt, das heißt das Biegen von Bereichen des Rohlings 29, die die zwei hinteren Gelenksflügel 21, die drei vorderen Gelenksflügel 22, die vier hinteren Halteflügel 24 und die vier vorderen Halteflügel 25 der Gelenkspfanne 20 bilden, quer zur Ebene 30.

Die zwei hinteren Gelenksflügel 21 und die drei vorderen Gelenksflügel 22 der Gelenkspfanne 20 werden dabei in die entgegengesetzte Richtung normal zur Ebene 30 wie die vier hinteren Halteflügel 24 und die vier vorderen Halteflügel 25 der Gelenkspfanne 20, ausgehend von der Ebene 30, gebogen.

Es versteht sich, dass das Biegen von Bereichen des Rohlings 29 in zwei unterschiedliche Richtungen in einem Verfahrensschritt oder auch in zwei aufeinanderfolgenden Verfahrensschritten erfolgen kann.

In **Fig. 14c** ist der dritte Verfahrensschritt dargestellt, das heißt das Formen des Rohlings 29, sodass die Gelenkspfanne 20 durch Einrollen des Rohlings 29 um die gedachte Längsachse 23 der Gelenkspfanne 20 gebildet wird.

In **Fig. 14d** ist der letzte Verfahrensschritt zur Fertigung der Gelenkspfanne 20 dargestellt, das heißt das Verbinden beziehungsweise ringförmiges Schließen des geformten Rohlings 29 aus der Fig. 14c, sodass die zwei zueinander komplementär geformten Ausrichtelemente 27, 28 ineinander greifen und so eine präzise Justierung zueinander aufweisen, die der mechanischen Stabilität der Gelenkspfanne 20 zuträglich ist.

**Fig. 15** zeigt einen Fahrzeugscheinwerfer 100 mit einem Lichtmodul 101.

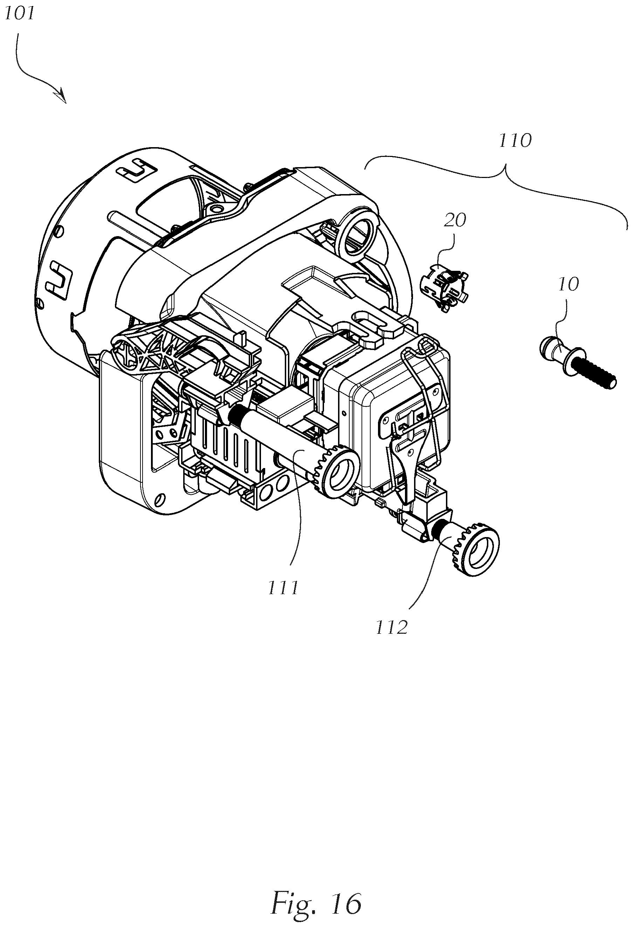

**Fig. 16** stellt dar, dass das Lichtmodul 101 im Fahrzeugscheinwerfer 100 durch eine Dreipunktaufhängung montiert werden kann. Die Dreipunktaufhängung umfasst ein festes Bein 110, das aus dem erfindungsgemäßen Kugelgelenk 1 gemäß der vorhergehenden Figuren mit dem Gelenkszapfen 10, der Gelenkspfanne 20 und einem Tragrahmen, der in diesem Beispiel Teil des Lichtmoduls 101 ist, gebildet ist, sowie zwei verstellbare Beine 111, 112, die als Einstellschrauben ausgeführt sind und somit eine einfache Verstellung ermöglichen, und die untereinander vorzugsweise ein gleichseitiges Dreieck bilden, wobei grundsätzlich alle dreieckigen Anordnungen der drei Beine geeignet sind. Das Kugelgelenk 1 auf dem festen Bei 110 dient als Fixpunkt der Dreipunktaufhängung, die eine sphärisch verstellbare Verbindung zwischen Gehäuse und Module herstellt.

Mittels der Dreipunktaufhängung wird erreicht, dass das Lichtmodul 101 mit dem Fahrzeugscheinwerfer 100, einer Fahrzeugscheinwerferkomponente oder einem Karosserieteil eines Fahrzeugs gelenkig befestigt werden kann und die Möglichkeit zur gegenseitigen Feinjustierung bietet.

In diesem Ausführungsbeispiel weist der Gelenkszapfen 10 ein Gewinde auf dem Gelenkschaft 12 auf, der in eine Öffnung mit einem komplementär geformten Innengewinde eingreifen kann und bei einer Drehung im Innengewinde eine Längsbewegung in Richtung der gedachte Längsachse 14 des Gelenkszapfens ausführen kann, wodurch eine zusätzliche Justierbewegung der Dreipunktaufhängung erreicht werden kann. Dies ist eine optionale Variante, da durch die beiden verstellbaren Beine 111, 112 bereits eine oftmals hinreichende Verstellbarkeit gegeben ist. Zur Ausübung der Drehung im Innengewinde kann der Gelenkszapfen 10 an dessen Gelenkskugel 11 beispielsweise einen Schlitz oder eine Ausnehmung in Form eines sechskantigen Volumens zu Aufnahme eines entsprechenden Schraubenziehers aufweisen, die durch das Lichtmodul 101 zugänglich ist.

Der Tragrahmen ist derart geformt, dass die Halteflügel 24, 25 der Gelenkshülse 20 im Tragrahmen einrasten können, um mechanisch fixiert zu werden.

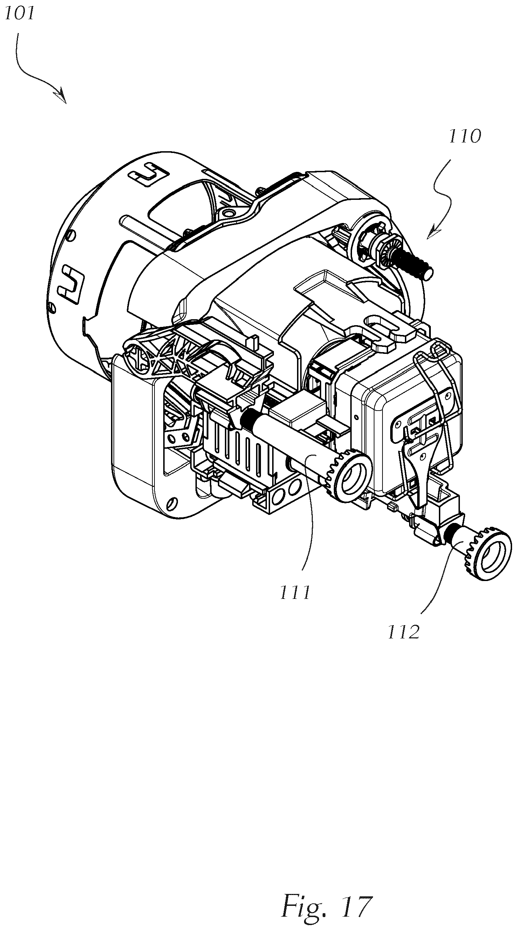

**Fig. 17** zeigt das Lichtmodul 101 gemäß der Fig. 16 in zusammengebautem Zustand des Kugelgelenks, das ein festes Bein 110 bildet und zusammen mit den zwei verstellbaren Beinen 111, 112 die Dreipunktaufhängung bildet. Das Lichtmodul ist insbesondere zur Erzeugung einer Fernlicht- und/ oder einer Abblendlicht-Lichtverteilung vorgesehen und kann eine Feinjustierung der abgestrahlten Lichtverteilung nach Betriebsvorschriften oder gesetzlichen Einbauvorschriften erfordern. Es kann auch notwendig sein, dass diese Feinjustierung im Laufe des Betriebs des Fahrzeugs wiederholt werden muss.

### Liste der Bezugszeichen:

- 1: Kugelgelenk

- 10: Gelenkszapfen
- 11: Gelenkskugel
- 12: Gelenkschaft
- 13: Gelenkskante
- 14: gedachte Längsachse des Gelenkszapfens
- 15: Einbaurichtung des Gelenkszapfens

- 20: Gelenkspfanne
- 21: hinterer Gelenksflügel
- 22: vorderer Gelenksflügel
- 23: gedachte Längsachse der Gelenkspfanne
- 24: hinterer Halteflügel
- 25: vorderer Halteflügel
- 27: erstes Ausrichtelement
- 28: zweites Ausrichtelement
- 29: Rohling
- 30: Schnittebene
- 31: Einbaurichtung der Gelenkspfanne

- 40: Tragrahmen
- 41: Steg
- 42: Stegverbinder

- 100: Fahrzeugscheinwerfer
- 101: Lichtmodul
- 110: festes Bein
- 111,112: verstellbares Bein

## Patentansprüche

1. Kugelgelenk (1) zur Befestigung eines Scheinwerfers in einem Fahrzeug, umfassend einen Gelenkszapfen (10), der eine Gelenkskugel (11) umfasst, die auf einer Seite in eine Stirnseite eines im Wesentlichen zylindrisch geformten Gelenkschafts (12) übergeht, und eine Gelenkspfanne (20) zur Aufnahme der Gelenkskugel (1), und
entlang des Umfangs der Gelenkspfanne (20) zumindest zwei hintere Gelenksflügel (21) ausgebildet sind, die gegen die Einbaurichtung (15) des Gelenkszapfens (10) orientiert sind und radial zur gedachten Längsachse (23) der Gelenkspfanne (20) geneigt sind, und
entlang des Umfangs der Gelenkspfanne (20) zumindest zwei vordere Gelenksflügel (22) ausgebildet sind, die in Einbaurichtung (15) des Gelenkszapfens (10) orientiert sind und radial zur gedachten Längsachse (23) der Gelenkspfanne (20) geneigt sind,
wobei die zumindest zwei hinteren Gelenksflügel (21) und die zumindest zwei vorderen Gelenksflügel (22) eingerichtet sind an der Gelenkskugel (11) anzuliegen und durch Federkraft an die Gelenkskugel (11) gedrückt zu werden, und
entlang des Umfangs der Gelenkspfanne zumindest zwei hintere Halteflügel angeordnet sind, die gegen die Einbaurichtung der Gelenkspfanne orientiert sind und radial von der gedachten Längsachse der Gelenkspfanne weg geneigt sind und die zumindest zwei hinteren Halteflügel eingerichtet sind, ein Verrutschen der Gelenkspfanne im Tragrahmen in Einbaurichtung der Gelenkspfanne zu verhindern, und
entlang des Umfangs der Gelenkspfanne zumindest zwei vordere Halteflügel angeordnet sind, die gegen die Einbaurichtung der Gelenkspfanne orientiert sind und radial von der gedachten Längsachse der Gelenkspfanne weg geneigt sind, und die zumindest zwei vorderen Halteflügel eingerichtet sind, ein Verrutschen der Gelenkspfanne im Tragrahmen entgegen der Einbaurichtung der Gelenkspfanne zu verhindern, **dadurch gekennzeichnet dass** die Gelenkspfanne eine hohlzylindrische Grundform aufweist und aus einem federnd elastischen Metall besteht, und
das Kugelgelenk (1) ferner einen Tragrahmen (40) mit einer Öffnung umfasst, die geeignet ist die Gelenkspfanne (20) aufzunehmen, und der Tragrahmen (40) ferner zumindest zwei Stege (41), vorzugsweise zumindest drei Stege (41) umfasst, die entlang des Umfangs der Öffnung des Tragrahmens (40) angeordnet sind und sich in axialer Richtung erstrecken und durch zumindest einen Stegverbinder (42) miteinander verbunden sind, wobei innenliegende Oberflächen der zumindest zwei Stege (41) und/oder des zumindest einen Stegverbinders (42) bezüglich der außenliegenden Oberfläche der Gelenkspfanne (20) zumindest teilweise komplementär geformt ausgebildet sind und eingerichtet sind, die Gelenkspfanne (20) abzustützen, und wobei entlang des Umfangs der hohlzylindrischen Gelenkspfanne (20) zumindest zwei hintere Halteflügel (24) angeordnet sind, die gegen die Einbaurichtung (31) der Gelenkspfanne (20) orientiert sind und radial von der gedachten Längsachse (23) der Gelenkspfanne (20) weg geneigt sind und die zumindest zwei hinteren Halteflügel (24) eingerichtet sind, ein Verrutschen der Gelenkspfanne (20) im Tragrahmen (40) in Einbaurichtung (31) der Gelenkspfanne (20) zu verhindern, und wobei
entlang des Umfangs der hohlzylindrischen Gelenkspfanne (20) zumindest zwei vordere Halteflügel (25) angeordnet sind, die gegen die Einbaurichtung (31) der Gelenkspfanne (20) orientiert sind und radial von der gedachten Längsachse (23) der Gelenkspfanne (20) weg geneigt sind, bevorzugt normal zur gedachten Längsachse (23) der Gelenkspfanne (20) orientiert sind, und die zumindest zwei vorderen Halteflügel (25) eingerichtet sind, ein Verrutschen der Gelenkspfanne (20) im Tragrahmen (40) entgegen der Einbaurichtung (31) der Gelenkspfanne (20) zu verhindern.

2. Kugelgelenk (1) nach einem Anspruch 1, **dadurch gekennzeichnet, dass** der Durchmesser der Gelenkskugel (11) größer ist als der radiale Durchmesser des Gelenkschafts (12), und
ein Übergang zwischen dem Gelenkschaft (12) und der Gelenkskugel (11) durch eine entlang des Umfangs der Gelenkspfanne (20) verlaufende konvexe Fläche gebildet ist, und
auf der Oberfläche des Gelenkszapfens (10) zwischen Gelenkschaft (12) und Gelenkskugel (11) eine entlang des Umfangs der Gelenkspfanne (20) verlaufende Gelenkskante (13) ausgebildet ist, wobei die Gelenkskante (13) vorzugsweise durch eine Schnittkurve der im Wesentlichen konkaven Oberfläche der Gelenkskugel (11) und der konvexen Fläche des Übergangs vom Gelenkschaft (12) zur Gelenkskugel (11) gebildet ist, und
sich die hinteren Gelenksflügel (21) in einem unverstellten Zustand, in dem eine gedachte Längsachse (14) des Gelenkszapfens (10) mit einer gedachten Längsachse (23) der Gelenkspfanne (20) übereinstimmt, zumindest bis zur Gelenkskante (13) erstrecken.

3. Kugelgelenk (1) nach Anspruch 1 oder 2, **dadurch gekennzeichnet, dass** die Gelenkspfanne (20) einteilig aus einem ebenen und aus einem metallischen Material, bevorzugt aus Stahlblech, gefertigt ist und eine Materialstärke zwischen 0,1 mm und 1 mm, bevorzugt zwischen 0,2 mm und 0,5 mm aufweist.

4. Kugelgelenk (1) nach einem der Ansprüche 1 bis 3, **dadurch gekennzeichnet, dass** die Gelenkspfanne (20) zumindest zwei zueinander komplementär geformte Ausrichtelemente (27, 28) umfasst, die entlang des Umfangs der Gelenkspfanne (20) angeordnet sind und eingerichtet sind, ineinander zu greifen.

5. Kugelgelenk (1) nach einem der Ansprüche 1 bis 4, **dadurch gekennzeichnet, dass** das Kugelgelenk (1) an einem oder innerhalb eines Fahrzeugscheinwerfers angeordnet ist und dazu eingerichtet ist, den Fahrzeugscheinwerfer in einer Einbaulage zu fixieren oder Scheinwerferkomponenten im Scheinwerfer einstellbar zu befestigen.

6. Fahrzeugscheinwerfer zur Erzeugung einer Fernlicht- und/ oder einer Abblendlicht-Lichtverteilung, mit zumindest einem Kugelgelenk (1) nach einem der Ansprüche 1 bis 5 zum Einbau des Fahrzeugscheinwerfers in einem Kraftfahrzeug, **dadurch gekennzeichnet, dass** das Kugelgelenk (1) eine fahrzeugseitig gelegene Trägereinheit mit dem Fahrzeugscheinwerfer verbindet.

7. Fahrzeugscheinwerfer zur Erzeugung einer Fernlicht- und/ oder einer Abblendlicht-Lichtverteilung, mit zumindest einem Kugelgelenk (1) nach einem der Ansprüche 1 bis 5 zum Einbau des Fahrzeugscheinwerfers in einem Kraftfahrzeug, **dadurch gekennzeichnet, dass** das Kugelgelenk (1) ein festes Bein (110) bildet, das zusammen mit zwei weiteren verstellbaren Beinen (111, 112) eine Dreipunktaufhängung zur Befestigung einer Leuchteinrichtung des Fahrzeugscheinwerfers an einer Fahrzeugscheinwerferkomponente oder eines Karosserieteils des Kraftfahrzeug bildet.

8. Verfahren zur Herstellung eines Kugelgelenks (1) nach einem der Ansprüche 1 bis 5, wobei die Gelenkspfanne (20) nach folgenden Schritten hergestellt wird:
Zuschneiden eines Rohlings (29) der Gelenkspfanne (20) aus einem ebenen Material, wobei der vollständige Zuschnitt des Rohlings (29) in einer Ebene (30) erfolgt;
Biegen von Bereichen des Rohlings (29), die die hinteren Gelenksflügel (21) und/ oder die hinteren Halteflügel (24) der Gelenkspfanne (20) bilden, quer zur Ebene (30);
Formen des Rohlings (29), sodass die Gelenkspfanne (20) durch Einrollen des Rohlings (29) um die gedachte Längsachse (23) der Gelenkspfanne (20) gebildet wird.

9. Verfahren zur Herstellung eines Kugelgelenks (1) nach Anspruch 8, **umfassend** folgenden Schritt:
Verbinden des geformten Rohlings (29), sodass zumindest zwei zueinander komplementär geformte Ausrichtelemente (27, 28) ineinander greifen.

## Claims

1. A ball joint (1) for fastening a headlight in a vehicle, comprising a joint journal (10) which comprises a joint ball (11), which merges on one side into an end face of a substantially cylindrical joint shaft (12), and a joint socket (20) for receiving the joint ball (1), and
at least two rear joint wings (21) being formed around the circumference of the joint socket (20), oriented counter to the installation direction (15) of the joint journal (10) and inclined radially to the imaginary longitudinal axis (23) of the joint socket (20), and
at least two front joint wings (22) being formed around the circumference of the joint socket (20), oriented in the installation direction (15) of the joint journal (10) and inclined radially to the imaginary longitudinal axis (23) of the joint socket (20),
the at least two rear joint wings (21) and the at least two front joint wings (22) being designed to bear against the joint ball (11) and to be pressed against the joint ball (11) by spring force, and
at least two rear retaining wings being arranged around the circumference of the joint socket, oriented counter to the installation direction of the joint socket and inclined radially away from the imaginary longitudinal axis of the joint socket, and the at least two rear retaining wings being designed to prevent slippage of the joint socket in the supporting frame in the installation direction of the joint socket, and
at least two front retaining wings being arranged around the circumference of the joint socket, oriented counter to the installation direction of the joint socket and inclined radially away from the imaginary longitudinal axis of the joint socket, and the at least two front retaining wings being designed to prevent slippage of the joint socket in the supporting frame counter to the installation direction of the joint socket,
**characterised in that**
the joint socket has a hollow-cylindrical main shape and consists of a spring-elastic metal, and the ball joint (1) also comprises a supporting frame (40) having an opening which is suitable for holding the joint socket (20), and the supporting frame (40) also comprises at least two bridges (41), preferably at least three bridges (41), which are arranged around the circumference of the opening of the supporting frame (40), extend in an axial direction and are connected to one another by at least one bridge connector (42), wherein
inner surfaces of the at least two bridges (41) and/or of the at least one bridge connector (42) are at least partially formed complementarily to the outer surface of the joint socket (20) and are designed to support the joint socket (20), and wherein at least two rear retaining wings (24) are arranged around the circumference of the hollow-cylindrical joint socket (20), oriented counter to the installation direction (31) of the joint socket (20) and inclined away from the imaginary longitudinal axis (23) of the joint socket (20), and the at least two rear retaining wings (24) are designed to prevent slippage of the joint socket (20) in the supporting frame (40) in the installation direction (31) of the joint socket (20), and wherein
at least two front retaining wings (25) are arranged around the circumference of the hollow-cylindrical joint socket (20), oriented counter to the installation direction (31) of the joint socket (20) and inclined radially away from the imaginary longitudinal axis (23) of the joint socket (20), preferably oriented normally to the imaginary longitudinal axis (23) of the joint socket (20), and the at least two front retaining wings (25) are designed to prevent slippage of the joint socket (20) in the supporting frame (40) counter to the installation direction (31) of the joint socket (20) .

2. The ball joint (1) according to Claim 1, **characterised in that** the diameter of the joint ball (11) is greater than the radial diameter of the joint shaft (12), and
a transition between the joint shaft (12) and the joint ball (11) is formed by a convex face running around the circumference of the joint socket (20), and
a joint edge (13) which runs around the circumference of the joint socket (20) is formed on the surface of the joint journal (10) between the joint shaft (12) and the joint ball (11), wherein the joint edge (13) is preferably formed by an intersection curve of the substantially concave surface of the joint ball (11) and the convex face of the transition from the joint shaft (12) to the joint ball (11), and
the rear joint wings (21) extend at least as far as the joint edge (13) when in an unadjusted state in which an imaginary longitudinal axis (14) of the joint journal (10) coincides with an imaginary longitudinal axis (23) of the joint socket (20).

3. The ball joint (1) according to Claim 1 or 2, **characterised in that** the joint socket (20) is produced in one piece from a flat, metallic material, preferably sheet steel, and has a material thickness of between 0.1 mm and 1 mm, preferably between 0.2 mm and 0.5 mm.

4. The ball joint (1) according to any one of Claims 1 to 3, **characterised in that** the joint socket (20) comprises at least two alignment elements (27, 28) which are formed complementarily to one another, arranged around the circumference of the joint socket (20) and designed to interlock.

5. The ball joint (1) according to any one of Claims 1 to 4, **characterised in that** the ball joint (1) is arranged on or inside a vehicle headlight and is designed to fix the vehicle headlight in an installation position or to fasten headlight components in the headlight in an adjustable manner.

6. A vehicle headlight for generating a full-beam and/or dipped-beam light distribution, having at least one ball joint (1) according to any one of Claims 1 to 5 for installing the vehicle headlight in a motor vehicle, **characterised in that** the ball joint (1) connects a support unit on the vehicle to the vehicle headlight.

7. A vehicle headlight for generating a full-beam and/or dipped-beam light distribution, having at least one ball joint (1) according to any one of Claims 1 to 5 for installing the vehicle headlight in a motor vehicle, **characterised in that** the ball joint (1) forms a fixed leg (110) which, together with two further, adjustable legs (111, 112), forms a three-point suspension for fastening a lamp device of the vehicle headlight to a vehicle headlight component or a body part of the motor vehicle.

8. A method for producing a ball joint (1) according to any one of Claims 1 to 5, wherein the joint socket (20) is produced by the following steps:
cutting a blank (29) for the joint socket (20) out of a flat material, wherein the cutting of the blank (29) takes place entirely within one plane (30);
bending regions of the blank (29) which form the rear joint wings (21) and/or the rear retaining wings (24) of the joint socket (20), transversely to the plane (30);
shaping the blank (29) so that the joint socket (20) is formed by rolling in the blank (29) about the imaginary longitudinal axis (23) of the joint socket (20).

9. The method for producing a ball joint (1) according to Claim 8, comprising the following step:
connecting the shaped blank (29) so that at least two alignment elements (27, 28) formed complementarily to one another interlock.

## Revendications

1. Articulation à rotule (1), destinée à fixer un projecteur dans un véhicule, comprenant un pivot d'articulation (10), qui comprend une rotule d'articulation (11) qui sur un côté, passe dans une face frontale d'une tige d'articulation (12) façonnée de manière sensiblement cylindrique, et une cavité d'articulation (20), destinée à recevoir la rotule d'articulation (1) et
le long de la périphérie de la cavité d'articulation (20) étant conçues au moins deux ailettes d'articulation (21) postérieures, qui sont orientés à l'encontre de la direction de montage (15) du pivot d'articulation (10) et qui sont inclinées radialement vers l'axe longitudinal (23) virtuel de la cavité d'articulation (20), et
le long de la périphérie de la cavité d'articulation (20) étant conçues au moins deux ailettes d'articulation (22) antérieures, qui sont orientées dans la direction de montage (15) du pivot d'articulation (10) et qui sont inclinées radialement vers l'axe longitudinal (23) virtuel de la cavité d'articulation (20),
les au moins deux ailettes d'articulation (21) postérieures et les au moins deux ailettes d'articulation (22) antérieures étant aménagées pour être adjacentes à la rotule d'articulation (11) et pour être pressées par une force de ressort contre la rotule d'articulation (11), et
le long de la périphérie de la cavité d'articulation étant placées au moins deux ailettes de maintien postérieures, qui sont orientées à l'encontre de la direction de montage de la cavité d'articulation et qui sont inclinées radialement en s'éloignant de l'axe longitudinal virtuel de la cavité d'articulation et les au moins deux ailettes de maintien postérieures étant aménagées pour empêcher un glissement de la cavité d'articulation dans le cadre de support dans la direction de montage de la cavité d'articulation, et
le long de la périphérie de la cavité d'articulation étant placées au moins deux ailettes de maintien antérieures, qui sont orientées à l'encontre de la direction de montage de la cavité d'articulation et qui sont inclinées radialement en s'éloignant de l'axe longitudinal virtuel de la cavité d'articulation, et les au moins deux ailettes de maintien antérieures étant aménagées pour empêcher un glissement de la cavité d'articulation dans le cadre de support, à l'encontre de la direction de montage de la cavité d'articulation,
**caractérisée en ce que**
la cavité d'articulation présente une forme de base en cylindre creux et est constituée d'un métal élastique résilient et l'articulation à rotule (1) comprend par ailleurs un cadre de support (40) pourvu d'un orifice, qui est apte à recevoir la cavité d'articulation (20) et le cadre de support (40) comprend par ailleurs au moins deux listels (41), de préférence au moins trois listels (41), qui sont placés le long de la périphérie de l'orifice du cadre de support (40) et qui s'étendent en direction axiale et qui sont reliés l'un à l'autre par au moins un connecteur de listels (42),
des surfaces internes des au moins deux listels (41) et/ ou de l'au moins un connecteur de listels (42) étant façonnées en complémentarité au moins partielle de la surface externe de la cavité d'articulation (20) et étant aménagées pour soutenir la cavité d'articulation (20), et le long de la périphérie de la cavité d'articulation (20) en forme de cylindre creux étant placées au moins deux ailettes de maintien (24) postérieures, qui sont orientées à l'encontre de la direction de montage (31) de la cavité d'articulation (20) et qui sont inclinées radialement en s'éloignant de l'axe longitudinal (23) virtuel de la cavité d'articulation (20) et les au moins deux ailettes de maintien (24) postérieures étant aménagées pour empêcher un glissement de la cavité d'articulation (20) dans le cadre de support (40), dans la direction de montage (31) de la cavité d'articulation (20), et
le long de la périphérie de la cavité d'articulation (20) en forme de cylindre creux étant placées au moins deux ailettes de maintien (25) antérieures, qui sont orientées à l'encontre de la direction de montage (31) de la cavité d'articulation (20) et qui et qui sont inclinées radialement en s'éloignant de l'axe longitudinal virtuel de la cavité d'articulation (20), qui sont orientées de préférence à la normale de l'axe longitudinal (23) virtuel de la cavité d'articulation (20) et les au moins deux ailettes de maintien (25) antérieures étant aménagées pour empêcher un glissement de la cavité d'articulation (20) dans le cadre de support (40), à l'encontre de la direction de montage (31) de la cavité d'articulation (20).

2. Articulation à rotule (1) selon la revendication 1, **caractérisée en ce que** le diamètre de la rotule d'articulation (11) est supérieur au diamètre radial de la tige d'articulation (12), et
un passage entre la tige d'articulation (12) et la rotule d'articulation (11) est formé par une surface convexe s'écoulant le long de la périphérie de la cavité d'articulation (20), et
sur la surface du pivot d'articulation (10), entre la tige d'articulation (12) et la rotule d'articulation (11) est conçue une arête d'articulation (13) s'écoulant le long de la périphérie de la cavité d'articulation (20), l'arête d'articulation (13) étant formée de préférence par une courbe d'intersection de la surface sensiblement concave de la rotule d'articulation (11) et de la surface convexe du passage de la tige d'articulation (12) vers la rotule d'articulation (11), et
dans un état de base, dans lequel un axe longitudinal (14) virtuel du pivot d'articulation (10) coïncide avec un axe longitudinal (23) virtuel de la cavité d'articulation (20), les ailettes d'articulation (21) s'étendent au moins jusqu'à l'arête d'articulation (13).

3. Articulation à rotule (1) selon la revendication 1 ou 2, **caractérisée en ce que** la cavité d'articulation (20) est fabriquée en monobloc en une matière plane et en une matière métallique, de préférence en tôle d'acier et présente une épaisseur de matière comprise entre 0,1 mm et 1 mm, de préférence entre 0,2 mm et 0,5 mm.

4. Articulation à rotule (1) selon l'une quelconque des revendications 1 à 3, **caractérisée en ce que** la cavité d'articulation (20) comprend au moins deux éléments d'alignement (27, 28) complémentaires l'un de l'autre, qui sont placés le long de la périphérie de la cavité d'articulation (20) et qui sont aménagés pour s'engager l'un dans l'autre.

5. Articulation à rotule (1) selon l'une quelconque des revendications 1 à 4, **caractérisée en ce que** l'articulation à rotule (1) est placée sur un ou à l'intérieur d'un projecteur de véhicule et est aménagée pour fixer le projecteur de véhicule dans une position de montage ou pour fixer des composants du projecteur dans le projecteur.

6. Projecteur de véhicule, destiné à générer une distribution lumineuse de feu de route et/ ou une distribution lumineuse de feu de croisement, pourvu d'au moins une articulation à rotule (1) selon l'une quelconque des revendications 1 à 5, destinée à intégrer le projecteur de véhicule dans un véhicule, **caractérisé en ce que** l'articulation à rotule (1) relie une unité de support située sur le véhicule avec le projecteur de véhicule.

7. Projecteur de véhicule, destiné à générer une distribution lumineuse de feu de route et/ ou une distribution lumineuse de feu de croisement, pourvu d'au moins une articulation à rotule (1) selon l'une quelconque des revendications 1 à 5, destinée à intégrer le projecteur de véhicule dans un véhicule, **caractérisée en ce que** l'articulation à rotule (1) forme une patte fixe (110), qui conjointement avec deux pattes (111, 112) réglables additionnelles forme une suspension à trois points, destinée à fixer un dispositif d'éclairage du projecteur de véhicule sur un composant de projecteur de véhicule ou sur une pièce de carrosserie du véhicule.

8. Procédé, destiné à la fabrication d'une articulation à rotule (1) selon l'une quelconque des revendications 1 à 5, la cavité d'articulation (20) étant fabriquée selon les étapes suivantes, consistant à :
couper une ébauche (29) de la cavité d'articulation (20) dans une matière plane, la coupe complète de l'ébauche (29) s'effectuant dans un plan (30) ;
cintrer des zones de l'ébauche (29), qui forment les ailettes d'articulation (21) postérieures et/ ou les ailettes de maintien (24) postérieures de la cavité d'articulation (20) à la transversale du plan (30) ;
façonner l'ébauche (29), de telle sorte que la cavité d'articulation (20) soit formée par enroulement de l'ébauche (29) autour de l'axe longitudinal (23) virtuel de la cavité d'articulation (20).

9. Procédé, destiné à la fabrication d'une articulation à rotule (1) selon la revendication 8, comprenant l'étape suivante consistant à :
relier l'ébauche (29) façonnée, de sorte qu'au moins deux éléments d'alignement (27, 28) façonnés en complémentarité l'un de l'autre s'engagent l'un dans l'autre.
